# FASCICULE DE BREVET EUROPEEN

(11) **EP 2 809 418 B1**
(45) Date de publication et mention de la délivrance du brevet: **12.07.2017**
(21) Numéro de dépôt: 13712336.0
(22) Date de dépôt: 29.01.2013
(51) Int. Cl.: B01D 24/14, B01D 24/46

(54) **PROCÉDÉ DE LAVAGE D'UN FILTRE AYANT AU MOINS DEUX COUCHES DE MEDIAS FILTRANTS, EN PARTICULIER POUR EAU DE MER**
VERFAHREN ZUM WASCHEN EINES FILTERS MIT WENIGSTENS ZWEI SCHICHTEN AUS EINEM FILTERMEDIUM, INSBESONDERE ZUR FILTRATION VON MEERWASSER
METHOD FOR WASHING A FILTER HAVING AT LEAST TWO LAYERS OF FILTERING MEDIA, IN PARTICULAR FOR FILTERING SEAWATER

(30) Priorité: 01.02.2012 FR 1250926
(43) Date de publication de la demande: 10.12.2014
(73) Titulaire: Suez International, 92040 Paris la Défense Cedex (FR)
(72) Inventeur: FLORES, Gérard, F-75010 Paris (FR)
(74) Mandataire: Cabinet Armengaud Aîné
(86) Numéro de dépôt international: PCT/IB2013/050750
(87) Numéro de publication internationale: WO 2013/114275

(56) Documents cités:
- DE-U1- 8 916 199
- FR-A1- 2 910 460
- US-A- 3 698 554
- US-A- 4 322 299
- US-A- 5 750 041

## Description

L'invention est relative à un procédé de lavage d'un filtre ayant au moins deux couches de médias filtrants pour une eau brute contenant des composants ayant tendance à former des galettes ou *"mud balls"* qui s'agglomèrent généralement en surface du filtre, notamment pour une eau de mer. Les couches de médias filtrants sont supportées par un plancher comportant des orifices de passage et muni de buses permettant une injection d'air et/ou d'eau de lavage, l'eau brute s'écoulant de haut en bas à travers les couches et l'eau traitée étant récupérée en partie basse du filtre, lequel comporte en partie haute au moins un déversoir pour la collecte de l'eau de lavage.

Les couches de médias filtrants comportent, souvent, au moins une couche de sable et une couche d'anthracite, ou autre média comme de la pierre ponce.

Lorsque l'eau brute traitée, en particulier l'eau de mer, contient des produits dérivés tels que des alginates, ou des polymères naturels, le traitement de l'eau avec du coagulant, tel que du chlorure ferrique (FeCl₃), donne naissance à des sortes de galettes ou *"mud balls"* dues à l'agglomération de particules de médias probablement provoquée par différents floculants naturels contenus dans l'eau, notamment les alginates. Ces galettes peuvent atteindre des dimensions d'environ 2 cm x 4 cm avec une épaisseur d'environ 0,5 cm.

La formation de ces galettes perturbe le fonctionnement du filtre et nécessite des opérations de rinçage ou lavage relativement longues, le rinçage pouvant aller jusqu'à plusieurs heures ou même dans certains cas il devient impossible d'évacuer ces galettes. Il en résulte une diminution sensible du rendement de production d'eau filtrée. En outre, les opérations de lavage classiques entraînent généralement une perte de médias évacués avec les eaux de lavage. Le document FR 2 910 460 A1 divulgue un procédé de lavage d'un filtre ayant au moins deux couches de médias filtrants pour une eau de surface. Le lavage d'un filtre de ce type se déroule généralement avec une étape de vidange, bullage avec de l'air et un rinçage final avec de l'eau. On peut intercaler avant le rinçage final une phase de lavage avec de l'air et de l'eau, cette phase se déroule sans déversement pour éviter la perte de média filtrant. L'invention a pour but, surtout, de fournir un procédé de lavage pour filtres du type défini précédemment qui permet de réduire la durée de l'opération de lavage tout en préservant la quantité de médias et leur disposition dans le filtre.

L'invention concerne aussi bien des filtres travaillant sous pression, que des filtres atmosphériques.

Selon l'invention, le procédé de lavage d'un filtre du genre défini précédemment est caractérisé en ce que les étapes successives suivantes sont effectuées :
**a/** une étape de préparation selon laquelle on ferme l'arrivée d'eau brute, et on assure une dépressurisation du filtre lorsque ce dernier travaille sous pression;
**b/** on abaisse le plan d'eau dans le filtre ;
**c/** on insuffle de l'air seul sous pression en partie basse du filtre, cet air traversant de bas en haut les couches du filtre et provoquant, en particulier par friction, la réduction des galettes en particules ;
**d/** on effectue un rinçage à l'eau seule, de bas en haut, qui permet de séparer les médias et de remonter à la surface les particules, le temps de rinçage à l'eau étant suffisamment court pour que le plan d'eau s'arrête au-dessous du niveau du bord supérieur du déversoir de collecte d'eau de lavage ;
**e/** on vide à nouveau l'eau du filtre par une évacuation en partie basse ;
**f/** on répète au moins une fois les étapes **c/, d/** et **e/,**
et on procède à un rinçage final en faisant passer une quantité d'eau de rétro-lavage injectée en partie basse du filtre et évacuée de la partie haute du filtre par une conduite.

De préférence, on répète les étapes **c/, d/** et **e/** au moins deux fois.

L'insufflation d'air seul est aussi appelée étape de bullage. Avantageusement, la durée de l'insufflation d'air seul est inférieure à 10min.

La durée du rinçage à l'eau seule peut être inférieure à 60 s, en particulier d'environ 45 s.

Avant chaque rinçage à l'eau seule, on n'élimine pas le matelas d'air se trouvant sous le plancher. C'est seulement avant le dernier rinçage dit rinçage final qu'on élimine le matelas d'air.

Avantageusement le niveau du plan d'eau en fin de rinçage à l'eau seule se trouve à au moins 5 cm au-dessous du niveau du bord supérieur du déversoir de collecte d'eau de lavage, de préférence entre 5 cm et 10 cm au-dessous de ce niveau.

Après avoir répété plusieurs fois la séquence vidange, bullage et rinçage, on effectue un rinçage final, après avoir évacué l'air du matelas situé sous le plancher, ce rinçage final correspondant à 5 à 10 covolumes, et les eaux sales de lavage sont évacuées vers un traitement des boues.

Le procédé de lavage concerne aussi bien un filtre d'axe horizontal qu'un filtre d'axe vertical. Une installation de filtration, en particulier pour eau de mer, pour mettre en oeuvre le procédé défini précédemment comporte un filtre ayant au moins deux couches de médias filtrants supportées par un plancher muni de buses, une canalisation munie d'une vanne pour admettre de l'air au-dessous du plancher et une canalisation munie d'une vanne pour admettre de l'eau de rétro-lavage au-dessous du plancher, une canalisation munie d'une vanne pour évacuer l'eau filtrée au-dessous du plancher, une dérivation vers un rejet munie d'une vanne servant à vidanger le filtre jusqu'à un niveau LSL(ou LSLL), et une canalisation d'extraction d'air située en un point haut du filtre et équipée d'une vanne, une canalisation d'admission d'eau brute, munie d'une vanne, en partie haute du filtre, au-dessus de la couche de médias, et une canalisation d'évacuation de l'eau de lavage collectée par au moins un déversoir en partie haute du filtre et munie d'une vanne, cette installation comportant une unité de commande des vannes pour réaliser les étapes du procédé défini précédemment.

L'invention consiste, mises à part les dispositions exposées ci-dessus en un certain nombre d'autres dispositions dont il sera plus explicitement question ci-après à propos d'un exemple de réalisation décrit avec référence aux dessins annexés mais qui n'est nullement limitatif. Sur ces dessins :
Fig. 1 est une coupe schématique verticale d'un filtre cylindrique horizontal, pour mise en oeuvre du procédé de l'invention, lors de l'étape d'injection sous pression d'eau brute floculée à traiter.
Fig. 2 montre, semblablement à Fig. 1, une étape de bullage avec insufflation d'air seul sous pression en partie inférieure du filtre, et
Fig. 3 montre, semblablement à Fig. 1, une étape de rinçage pendant une courte période.

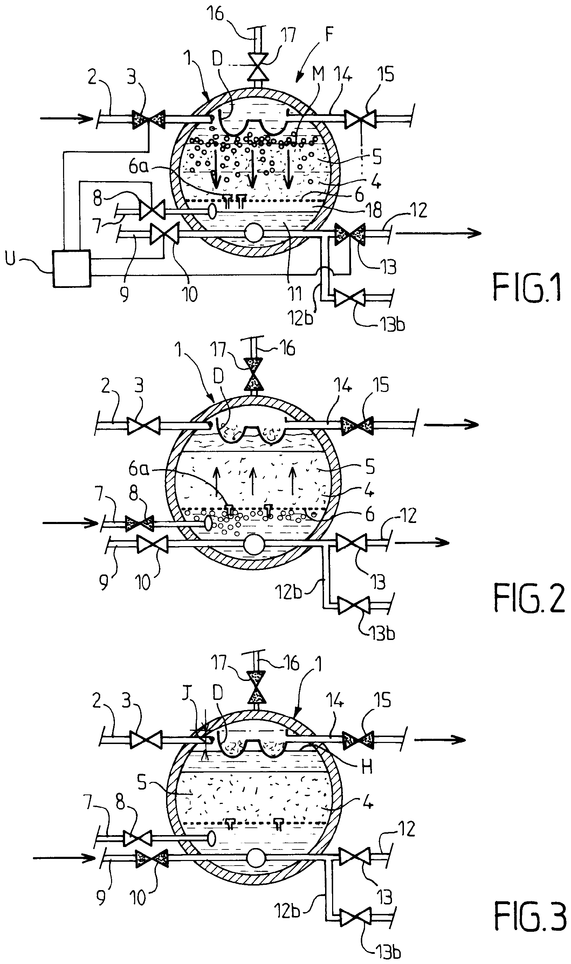

En se reportant aux dessins, notamment à Fig. 1, on peut voir un filtre F sous pression, pour eau de mer ou plus généralement pour eau brute contenant des composants ayant tendance à former des galettes ou *"mud balls"* qui s'agglomèrent généralement en surface du filtre.

Selon l'exemple représenté sur les dessins, le filtre F est un filtre horizontal comportant une enveloppe cylindrique 1, d'axe horizontal, dans laquelle l'eau brute, ayant subi un traitement de floculation, est introduite sous pression par une canalisation 2, munie d'une vanne 3, débouchant en partie haute de la section transversale de l'enveloppe 1. Toutes les vannes mentionnées dans la description sont du type électrovannes commandées à distance.

Le filtre comporte au moins deux couches de médias filtrants. Dans l'exemple représenté, le filtre F est un filtre bicouche comportant une couche inférieure 4 de sable et une couche supérieure 5 d'anthracite. Les couches sont supportées par un plancher 6 horizontal, comportant des orifices de passage, situé en partie basse du filtre et s'étendant, en section transversale, suivant une corde de la section circulaire. Le plancher est muni de buses 6a permettant une injection d'air et/ou d'eau de lavage. L'air est admis en partie basse, au-dessous du plancher 6, par une canalisation 7 munie d'une vanne 8, tandis que l'eau de lavage est introduite, en partie basse du filtre, par une conduite 9 munie d'une vanne 10.

L'eau brute, introduite en partie haute du filtre, s'écoule de haut en bas en traversant les couches 5 et 4, puis les orifices du plancher 6, et forme en partie basse une nappe 11 d'eau filtrée qui peut être évacuée par une conduite 12 munie d'une vanne 13. Une dérivation 12b, munie d'une vanne 13b, est branchée sur la conduite12, en amont de la vanne 13, pour une évacuation vers un rejet.

L'eau de lavage injectée en partie basse du filtre monte de bas en haut à travers les couches 4 et 5, exerçant un rétro-lavage, est collectée en partie haute par au moins un déversoir D, et est évacuée de la partie haute du filtre par une conduite 14 reliée au déversoir et munie d'une vanne 15.

L'air est évacué de la partie haute du filtre par une conduite 16 munie d'une vanne 17.

Lors de l'opération de filtration sous pression, illustrée sur Fig.1, l'eau brute est admise par la conduite 2, la vanne 3 étant ouverte de même que la vanne 13 d'évacuation de l'eau filtrée. Les autres vannes sont fermées. La partie supérieure du filtre, située au-dessus des couches de filtration, est remplie d'eau brute sous pression,

L'eau s'écoule à travers les couches du filtre et l'eau filtrée recueillie en partie basse est évacuée par la conduite 12.

L'eau de mer contient des composants tels que des alginates, qui s'agglomèrent avec des particules de médias et forment des galettes ou *"mud balls"* M généralement en surface du filtre. Ces galettes M peuvent présenter des dimensions d'environ 2 cm x 4 cm avec une épaisseur de 0,5 cm environ, et freinent de plus en plus la filtration lorsque leur nombre augmente.

Le procédé de lavage selon l'invention permet de réduire le volume des galettes M en les soumettant à un phénomène de friction par mise en contact avec de l'air afin de les sécher, et d'évacuer les fines formées vers la partie supérieure du filtre.

Pour le lavage, dans une première étape de préparation **a/,** la vanne 3 d'arrivée d'eau brute est fermée puis, après un certain temps, la vanne 13. Ensuite on dépressurise, notamment par ouverture des vannes 15 et 17. On assure la destruction du gâteau de filtration en le cassant par envoi à contre courant, soit de bas en haut, d'une petite quantité d'eau en ouvrant la vanne 10, par exemple pendant quelques secondes. A la fin de cette étape on maintient ouvertes, ou l'on ouvre, les vannes 15 et 17 jusqu'à la fin du rinçage final.

Lors de l'étape suivante **b/,** le plan d'eau s'abaisse par évacuation de l'eau filtrée par la conduite 12b et la vanne 13b, qui a été ouverte, jusqu'à un niveau, de 5 à 10 cm au-dessus du média, détecté par deux sondes de niveau (LSL et LSLL). La vanne 13b est ensuite fermée.

Pour l'étape suivante **c/,** la vanne 8 d'arrivée d'air de balayage est ouverte (voir Fig.2), et on insuffle ainsi de l'air seul sous pression en partie basse du filtre, cet air traversant de bas en haut les couches 4 et 5 du filtre et provoquant, en particulier par friction, la réduction des galettes M en fines particules.

La durée de cette injection d'air, ou bullage, est réduite, notamment inférieure à 10 min (généralement 5 à 6 minutes), après ce temps la vanne 8 se referme.

Un tel bullage pendant un temps relativement court, de quelques minutes, permet d'éviter, ou de limiter, le mélange entre les médias des deux couches 4 et 5.

Pendant l'opération **c/** de bullage, comme illustré sur Fig. 2, la vanne 15 d'évacuation d'eau de lavage est ouverte ainsi que la vanne 17 d'évacuation d'air.

L'air comprimé injecté permet, par aération, d'assécher les galettes qui se transforment d'autant mieux en fines particules.

L'étape suivante **d/** consiste en un rinçage court à l'eau seule, de bas en haut, par ouverture de la vanne 10 d'eau de rétro-lavage et de la vanne 15 d'évacuation de l'eau de lavage (voir Fig.3). La vanne 17 d'évacuation d'air est aussi ouverte, tandis que les autres vannes sont fermées. Cette étape **d/** permet de séparer les médias sable et anthracite et de reconstituer les couches 4 et 5 sans mélange notable. En outre, le rinçage permet de remonter à la surface les particules issues des galettes M.

Le rinçage de l'étape **d/** est effectué pendant un temps suffisamment court pour que le plan d'eau H (Fig.3) reste à un niveau inférieur à celui du bord supérieur du déversoir D de collecte d'eau de lavage. Avantageusement, le plan d'eau H à la fin d'un rinçage est à une distance J d'au moins 5 cm et de préférence comprise entre 5 et 10 cm au-dessous du niveau du bord supérieur du déversoir. On évite ainsi une perte de médias qui seraient entraînés par le courant de lavage dans la conduite 14 d'évacuation.

La durée d'un rinçage à l'eau seule est réduite, généralement inférieure à 60 s et notamment de l'ordre de 30 à 45 s.

Lors de l'étape suivante e/, on vide l'eau du filtre à nouveau en évacuant l'eau par la conduite 12b, la vanne 13b étant ouverte, jusqu'au niveau de 5 à 10 cm au-dessus du média.

On répète au moins une fois et de préférence deux fois les étapes **c/, d/** et **e/.**

Seulement juste avant le rinçage final, l'air du matelas 18, situé au-dessous du plancher 6, est évacué par une sortie non représentée, de manière à éviter, lors du rinçage, un mélange de bulles d'air et d'eau de rinçage.

Lorsque les séquences avec rinçage de courte durée, généralement inférieure à 60s, ont été effectuées, on procède à un rinçage final, l'air du matelas 18 étant évacué. Lors de ce rinçage, on fait passer une quantité d'eau de rétro-lavage correspondant à plusieurs covolumes (un covolume correspondant au volume total du média sable et anthracite), notamment de 5 à 10 covolumes, en évacuant les eaux sales de lavage vers un traitement des boues par la conduite 14 dont la vanne 15 est ouverte. La vanne 10 d'arrivée d'eau de rétro-lavage est également ouverte de même que la vanne 17 d'évacuation d'air, tandis que les autres vannes sont fermées.

Une installation pour la mise en oeuvre du procédé comporte le filtre F, les différentes canalisations et vannes, et une unité de commande U (Fig.1) des vannes pour réaliser les séquences d'ouverture et fermeture des vannes, selon le procédé.

La solution de l'invention consiste ainsi à vidanger le filtre, à effectuer un bullage à l'air seul, puis un rinçage à l'eau seule de courte durée afin d'éviter de déborder sur les déversoirs ou goulottes d'évacuation et de perdre du média. Le matelas d'air 18 sous le plancher 6 est éliminé juste avant le rinçage final uniquement.

Cette séquence vidange, bullage et rinçage de courte durée est répétée plusieurs fois, deux répétitions suffisant en général.

Les étapes de préparation au lavage du filtre permettent d'assurer la dépressurisation, de casser le gâteau de filtration et d'abaisser le plan d'eau pour éviter de perdre du média pendant l'étape de bullage à l'air sur-pressé.

L'invention s'applique aussi bien à des filtres horizontaux (hauteur totale de la vanne de vidange jusqu'à l'évent au maximum de 4m, pour raison de transport et de fabrication) qu'à des filtres verticaux (pour des raisons économiques).

Le procédé ne nécessite pas de modification d'équipement et permet d'améliorer le rendement du filtre, notamment en augmentant le temps de filtration.

Le procédé peut fonctionner avec un filtre atmosphérique.

## Revendications

1. Procédé de lavage d'un filtre (F) ayant au moins deux couches de médias filtrants pour une eau brute contenant des composants ayant tendance à former des galettes (M) ou *"mud balls*" qui s'agglomèrent généralement en surface du filtre, notamment pour une eau de mer, les couches de médias filtrants étant supportées par un plancher (6) comportant des orifices de passage et muni de buses (6a) permettant une injection d'air et/ou d'eau de lavage, l'eau brute s'écoulant de haut en bas à travers les couches, et l'eau traitée étant récupérée en partie basse du filtre, lequel comporte en partie haute au moins un déversoir pour la collecte de l'eau de lavage, **caractérisé en ce que** les étapes successives suivantes sont effectuées :
**a/** une étape de préparation selon laquelle on ferme l'arrivée d'eau brute, et on assure une dépressurisation du filtre lorsque ce dernier travaille sous pression ;
**b/** on abaisse le plan d'eau dans le filtre ;
**c/** on insuffle de l'air seul sous pression en partie basse du filtre, cet air traversant de bas en haut les couches du filtre et provoquant, en particulier par friction, la réduction des galettes en particules ;
**d/** on effectue un rinçage à l'eau seule, de bas en haut, qui permet de séparer les médias et de remonter à la surface les particules, le temps de rinçage à l'eau étant suffisamment court pour que le plan d'eau s'arrête au-dessous du niveau du bord supérieur du déversoir de collecte d'eau de lavage ;
**e/** on vide à nouveau l'eau du filtre par une évacuation en partie basse ;
**f/** on répète au moins une fois les étapes **c/, d/** et **e/,**
et on procède à un rinçage final en faisant passer une quantité d'eau de rétro-lavage injectée en partie basse du filtre et évacuée de la partie haute du filtre par une conduite (14).

2. Procédé selon la revendication 1, **caractérisé en ce que** l'on répète les étapes **c/, d/** et **e/** au moins deux fois.

3. Procédé selon la revendication 1 ou 2, **caractérisé en ce que** la durée de l'insufflation d'air seul est inférieure à 10 min.

4. Procédé selon l'une quelconque des revendications précédentes, **caractérisé en ce que** la durée du rinçage à l'eau seule est inférieure à 60 s, en particulier d'environ 45 s.

5. Procédé selon l'une quelconque des revendications précédentes, **caractérisé en ce qu'**avant chaque rinçage à l'eau seule, on n'élimine pas le matelas d'air se trouvant sous le plancher, celui-ci sera éliminé juste avant le rinçage final.

6. Procédé selon l'une quelconque des revendications précédentes, **caractérisé en ce que** le niveau (H) du plan d'eau en fin de rinçage à l'eau seule se trouve à au moins 5 cm au-dessous du niveau du bord supérieur du déversoir (D) de collecte d'eau de lavage.

7. Procédé selon la revendication 6, **caractérisé en ce que** le niveau (H) du plan d'eau en fin de rinçage à l'eau seule se trouve entre 5 cm et 10 cm au-dessous du niveau du bord supérieur du déversoir (D) de collecte d'eau de lavage.

8. Procédé selon l'une quelconque des revendications précédentes, **caractérisé en ce que**, après avoir répété plusieurs fois la séquence vidange, bullage et rinçage, on effectue un rinçage final, après avoir évacué l'air du matelas situé sous le plancher, ce rinçage final correspondant à 5 à 10 covolumes, et les eaux sales de lavage sont évacuées vers un traitement des boues.

## Patentansprüche

1. Verfahren zum Waschen eines Filters (F) mit mindestens zwei Schichten von Filtermedien für Rohwasser, das Bestandteile enthält, die zur Bildung von Kuchen (M) oder "mud balls" neigen, welche sich im Allgemeinen an der Oberfläche des Filters ansammeln, insbesondere für Meerwasser, wobei die Filtermedienschichten von einer Rohdecke (6) gestützt werden, welche Durchlassöffnungen aufweist und mit Düsen (6a) versehen ist, die ein Einspritzen von Luft und/oder Waschwasser ermöglichen, wobei das Rohwasser von oben nach unten durch die Schichten läuft und das aufbereitete Wasser im unteren Teil des Filters gewonnen wird, welcher im oberen Teil mindestens einen Überlauf zum Sammeln des Waschwassers aufweist, **dadurch gekennzeichnet, dass** die folgenden Schritte durchgeführt werden:
a/ ein Vorbereitungsschritt, bei welchem der Rohwassereinlass geschlossen wird und eine Druckentlastung des Filters sichergestellt wird, wenn dieser unter Druck arbeitet;
b/ Absenken des Wasserspiegels in dem Filter;
c/ unter Druck erfolgendes Einblasen von ausschließlich Luft am unteren Teil des Filters, wobei diese Luft die Filterschichten von unten nach oben durchquert und insbesondere durch Reibung die Verringerung der Partikelkuchen bewirkt;
d/ Durchführen eines ausschließlich mit Wasser erfolgenden Spülens von unten nach oben, welches es ermöglicht, die Medien zu trennen und die Partikel an die Oberfläche zu bringen, wobei die Dauer des Spülens mit Wasser ausreichend kurz ist, dass der Wasserspiegel unter der Höhe des oberen Randes des Waschwassersammelüberlaufs zum Stehen kommt;
e/ erneutes Leeren des Wassers aus dem Filter durch ein Abziehen im unteren Teil;
f/ mindestens einmaliges Wiederholen der Schritte c/, d/ und e/,
und Durchführen eines abschließenden Spülens durch das Hindurchleiten einer Rückspülwassermenge, die in den unteren Teil des Filters eingespritzt wird und über eine Leitung (14) am oberen Teil des Filters abgezogen wird.

2. Verfahren nach Anspruch 1, **dadurch gekennzeichnet, dass** die Schritte c/, d/ und e/ mindestens zwei Mal wiederholt werden.

3. Verfahren nach Anspruch 1 oder 2, **dadurch gekennzeichnet, dass** die Dauer des Einblasens von ausschließlich Luft unter 10 Min. beträgt.

4. Verfahren nach einem der vorhergehenden Ansprüche, **dadurch gekennzeichnet, dass** die Dauer des ausschließlich mit Wasser erfolgenden Spülens geringer als 60 s, insbesondere ungefähr 45 s, ist.

5. Verfahren nach einem der vorhergehenden Ansprüche, **dadurch gekennzeichnet, dass** vor jedem ausschließlich mit Wasser erfolgenden Spülen das sich unter der Rohdecke befindliche Luftpolster nicht entfernt wird, wobei dieses unmittelbar vor dem letzten Spülen entfernt wird.

6. Verfahren nach einem der vorhergehenden Ansprüche, **dadurch gekennzeichnet, dass** die Höhe (H) des Wasserspiegels am Ende des ausschließlich mit Wasser erfolgenden Spülens mindestens 5 cm unter der Höhe des oberen Randes des Waschwassersammelüberlaufs (D) liegt.

7. Verfahren nach Anspruch 6, **dadurch gekennzeichnet, dass** die Höhe (H) des Wasserspiegels am Ende des ausschließlich mit Wasser erfolgenden Spülens zwischen 5 cm und 10 cm unter der Höhe des oberen Randes des Waschwassersammelüberlaufs (D) liegt.

8. Verfahren nach einem der vorhergehenden Ansprüche, **dadurch gekennzeichnet, dass** nach mehrmaligem Wiederholen der Abfolge Entleeren, Belüften und Spülen, ein letztes Spülen durchgeführt wird, nachdem die Luft des unter der Rohdecke befindlichen Polsters abgezogen wurde, wobei das letzte Spülen 5 bis 10 Kovolumina entspricht und das verschmutzte Waschwasser zu einer Schlammbehandlung abgeleitet wird.

## Claims

1. A method for washing a filter (F) having at least two layers of filter media for a raw water containing components that have a tendency to form cakes or "mud balls" (M) which generally agglomerate at the surface of the filter, notably for seawater, the layers of filter media being supported by a floor (6) comprising passage orifices and provided with nozzles (6a) that allow an injection of washing water and/or air, the raw water flowing from top to bottom through the layers, and the treated water being collected at the bottom part of the filter, which at the top part comprises at least one weir for collecting the washing water, **characterized in that** the following successive steps are carried out:
a/ a preparation step in which the raw water inlet is closed and the filter, where the latter operates under pressure, is depressurized;
b/ the water level in the filter is lowered;
c/ air alone is blown under pressure into the bottom part of the filter, this air passing from bottom to top through the layers of the filter and causing the cakes to be reduced to particles, particularly by friction;
d/ rinsing is carried out using water alone, from bottom to top, allowing the media to separate and causing the particles to rise to the surface, the water-rinsing time being short enough that the water level stops rising below the level of the upper edge of the washing water collecting weir;
e/ the water is emptied out of the filter again by a discharge at the bottom part;
f/ steps c/, d/ and e/ are repeated at least once,
and a final rinsing is performed by passing through a quantity of backwash water which is injected at the bottom part of the filter and discharged from the top part of the filter by a pipe (14).

2. The method as claimed in claim 1, **characterized in that** steps c/, d/ and e/ are repeated at least twice.

3. The method as claimed in claim 1 or 2, **characterized in that** the duration for which air alone is blown in is less than 10 min.

4. The method as claimed in any one of the preceding claims, **characterized in that** the duration of the rinsing with water alone is less than 60 s, in particular around 45 s.

5. The method as claimed in any one of the preceding claims, **characterized in that** prior to each rinsing with water alone, the cushion of air under the floor is not eliminated, this cushion being eliminated just prior to the final rinse.

6. The method as claimed in any one of the preceding claims, **characterized in that** the level (H) of the water at the end of rinsing with water alone lies at least 5 cm below the level of the upper edge of the washing water collection weir (D).

7. The method as claimed in claim 6, **characterized in that** the level (H) of the water at the end of rinsing with water alone lies between 5 cm and 10 cm below the level of the upper edge of the washing water collection weir (D).

8. The method as claimed in any one of the preceding claims, **characterized in that**, having repeated the draining, bubbling and rinsing sequence a number of times, a final rinse is carried out after the air from the cushion situated under the floor has been discharged, this final rinsing corresponding to 5 to 10 covolumes and the dirty washing water is discharged to a sludge treatment facility.
